# EUROPÄISCHE PATENTSCHRIFT

(11) **EP 1 063 251 B1**
(45) Veröffentlichungstag und Bekanntmachung des Hinweises auf die Patenterteilung: **15.10.2003**
(21) Anmeldenummer: 00111894.2
(22) Anmeldetag: 13.06.2000
(51) Int. Cl.: C08G 18/79, C08G 18/80

(54) **Verfahren zur Herstellung Uretdiongruppen aufweisender Polyadditionsverbindungen**
Process of preparation of polyaddition compounds containing uretdione groups
Procédé de preparation de produits de polyaddition qui contiennent des groupes uretdione

(30) Priorität: 25.06.1999 DE 19929064
(43) Veröffentlichungstag der Anmeldung: 27.12.2000
(73) Patentinhaber: BAYER AG, 51368 Leverkusen (DE)
(72) Erfinder: Laas, Hans-Josef, Dr., 50733 Köln (DE); Wilmes, Oswald, Dr., 51061 Köln (DE); Meier-Westhues, Hans-Ulrich, Dr., 51379 Leverkusen (DE); Ullrich, Martin, 51375 Leverkusen (DE); Fischer, Konrad, Dr., 51519 Odenthal (DE); Freudenberg, Ulrich, Dr., 50259 Pulheim (DE)

(56) Entgegenhaltungen:
- EP-A- 0 639 598
- EP-A- 0 669 354
- EP-A- 0 720 994
- EP-A- 0 811 646

## Beschreibung

Die Erfindung betrifft ein neues Verfahren zur lösemittelfreien Herstellung von Uretdiongruppen aufweisenden Polyadditionsverbindungen.

Als blockierungsmittelfreie Vernetzer für hoch wetterbeständige Polyurethan(PUR)-Pulverlacke finden heute in zunehmendem Maße Uretdiongruppen aufweisende Polyadditionsverbindungen Verwendung. Als Vernetzungsprinzip wird bei diesen Verbindungen die thermische Rückspaltung der Uretdionstrukturen in freie Isocyanatgruppen und deren anschließende Reaktion mit einem hydroxyfunktionellen Bindemittel genutzt.

Die Herstellung von Uretdionpulverlackvernetzern ist prinzipiell bekannt. Beispielsweise beschreibt die DE-A 24 20 475 Umsetzungsprodukte Uretdiongruppen-haltiger Polyisocyanate bzw. Polyisocyanatgemische mit difunktionellen und gegebenenfalls monofunktionellen, gegenüber Isocyanaten reaktive Gruppen tragenden aliphatischen oder cycloaliphatischen Verbindungen als blockierungsmittelfreie Vernetzer für PUR-Einbrennsysteme. Insbesondere bei der Umsetzung Uretdiongruppen-haltiger Polyisocyanate auf Basis aromatischer Diisocyanate, wie Toluylendiisocyanat (TDI), mit einfachen, gegebenenfalls Ethersauerstoff aufweisenden Diolen entstehen feste, als Pulverlackhärter geeignete Produkte, die Schmelzpunkte im Bereich von 140 bis 260°C aufweisen.

Da die Rückspaltung des Uretdionringes in Gegenwart von hydroxyfunktionellen Reaktionspartnern aber schon ab Temperaturen von etwa 110°C merklich einsetzt, lassen sich die beschriebenen, als Pulverlackvernetzer geeigneten Polyadditionsprodukte nicht in Schmelze, sondern nur in gegenüber Isocyanaten inerten Lösemitteln gelöst herstellen, was anschließend einen zusätzlichen Verfahrensschritt zur Abtrennung des Hilfslösemittels erforderlich macht.

Uretdiongruppen-haltige Pulverlackvernetzer, aufgebaut aus dem linearen, difunktionellen Uretdion des 1-Isocyanato-3,3,5-trimethyl-5-isocyanatomethyl-cyclohexans (IPDI), einfachen, gegebenenfalls Ethersauerstoff aufweisenden Diolen und gegebenenfalls endständig Monoaminen oder Monoalkoholen, sind z.B. aus der EP-A 00 45 994, EP-A 00 45 996 und EP-A 00 45 998 bekannt. Bei der Herstellung dieser Polyadditionsprodukte darf eine Reaktionstemperatur von 110°C nicht überschritten werden, da sonst Rückspaltung der Uretdiongruppen eintritt. Insbesondere bei einem hohen Verlängerungsgrad, wie er für eine hohe Uretdionfunktionalität des Vernetzers und somit eine hohe Vernetzungsdichte erforderlich ist, d.h. wenn mindestens 70 % der NCO-Gruppen der difunktionellen IPDI-Uretdione unter Kettenverlängerung mit Diolen umgesetzt werden, entstehen jedoch Produkte, die Schmelzpunkte im Bereich dieser Rückspalttemperatur oder sogar darüber aufweisen. Solche Polyadditionsverbindungen lassen sich daher ebenfalls nur in Lösung mit einem nachfolgenden Ausdampfschritt sicher und reproduzierbar herstellen.

Aber auch die in den genannten Veröffentlichungen beschriebenen IPDI-Uret-dionpulverlackhärter, mit deutlich unterhalb der Rückspalttemperatur liegenden Schmelzpunkten im Bereich von etwa 80°C, besitzen bei der maximal erlaubten Reaktionstemperatur von 110°C noch so hohe Schmelzviskositäten, daß ihre Herstellung in der Schmelze aufgrund der ungenügenden Rührbarkeit im technischen Maßstab kaum möglich ist.

Lösemittelfrei herstellbare Uretdionpulverlackvemetzer werden erstmals in der EP-A 639 598 beschrieben. Dabei handelt es sich um spezielle, unter Verwendung Esterund/oder Carbonatgruppen-haltiger Kettenverlängerungsmittel hergestellte Polyadditionsverbindungen, die sich durch besonders niedrige Schmelzviskositäten auszeichnen. Ähnlich niedrige Viskositäten weisen auch die in der EP-A 720 994 beschriebenen Dimerdiol-modifizierten Uretdionvernetzer auf, die sich ebenfalls bereits bei Temperaturen nur wenig oberhalb ihres Schmelzpunktes problemlos in Schmelze rühren lassen. Die lösemittelfreie Herstellung der in beiden Veröffentlichungen beschriebenen Vemetzer gelingt bis zu einem Maßstab von mehreren hundert Kilogramm, ohne daß der Gehalt an freien NCO-Gruppen übermäßig ansteigt. Bei größeren Produktionsansätzen macht sich allerdings auch hier die Thermolabilität der Uretdionstrukturen nachteilig bemerkbar, wenn zum Austragen der Produktschmelze aus dem Reaktor längere Zeiten erforderlich werden. Mit zunehmender Verweildauer im Reaktionskessel steigt dann der NCO-Gehalt innerhalb einzelner Produktionspartien kontinuierlich an, während gleichzeitig der damit verbundene Molekulargewichtsabbau zu einer stetigen Abnahme der Glasübergangstemperatur führt. Die in der EP-A 639 598 bzw. EP-A 720 994 beschriebenen Uretdionvernetzer lassen sich aus diesem Grund in einem wirtschaftlich sinnvollen Maßstab nur mit stark schwankender Qualität erhalten.

Ein weiteres lösemittelfreies Herstellverfahren für Uretdionpulverlackvernetzer ist aus den EP-A 669 353, 669 354, 780 417 und 825 214 bekannt. Diese Veröffentlichungen beschreiben die kontinuierliche Umsetzung von Uretdionpolyisocyanaten mit (Polyester)diolen bzw. -polyolen und gegebenenfalls Monoalkoholen in speziellen Intensivknetern, beispielsweise Zweischneckenextrudern, bei für Uretdiongruppen extremen Temperaturen von bis zu 190°C. Da die Urethanisierung in diesem Temperaturbereich sehr rasch abläuft, kann die Verweilzeit der Produktschmelze in der Reaktionsschnecke so kurz gewählt werden, daß die Uretdionspaltung vemachlässigbar gering ist. Auf diese Weise erhält man Produkte konstanter Qualität mit hohem Uretdiongehalt und geringem Anteil an freien Isocyanatgruppen. Von Nachteil sind bei diesem Verfahren allerdings die sehr hohen Investitionskosten für geeignete Extruder sowie die vergleichsweise hohen Betriebs- und Wartungskosten.

Aufgabe der vorliegenden Erfindung war es daher, ein neues Verfahren zur Herstellung Uretdiongruppen aufweisender Polyadditionsprodukte zur Verfügung zu stellen, das die genannten Nachteile der Verfahren des Standes der Technik nicht aufweist. Das neue Verfahren sollte auf einfache Weise eine lösemittelfreie Herstellung von Uretdionpulverlackvernetzern konstanter Qualität ermöglichen, ohne daß dazu aufwendige und teure Mischaggregate benötigt werden. Diese Aufgabe konnte nun mit der Bereitstellung des nachfolgend näher beschriebenen erfindungsgemäßen Verfahrens gelöst werden.

Das erfindungsgemäße Verfahren basiert auf der überraschenden Beobachtung, daß sich blockierungsmittelfreie Uretdionpulverlackvernetzer ungeachtet ihrer zum Teil sehr hohen Schmelzviskosität lösemittelfrei, d. h. in der Schmelze, in einfachen statischen Mischern herstellen lassen, ohne daß es dabei zu einer merklichen Rückspaltung von Uretdiongruppen kommt. Dies war umso überraschender, da aus der EP-A 669 355 eine kontinuierliche lösemittelfreie Herstellung blockierter Polyurethan-Pulverlackvernetzer bekannt war, bei der sich in statischen Mischern lediglich Produkte herstellen lassen, die bei 130°C Schmelzviskositäten von ≤ 150 000 mPa·s, vorzugsweise ≤ 100 000 mPa·s und insbesondere ≤ 50 000 mPa·s aufweisen, während höherviskose Produktschmelzen nur in Intensivknetern verarbeitet werden können. Der Fachmann konnte daher keineswegs davon ausgehen, daß sich die thermolabilen, als Pulverlackvemetzer geeigneten Uretdiongruppen aufweisende Polyadditionsverbindungen, die bei einer Temperatur von 130°C im allgemeinen Viskositäten von 400 000 mPa·s oder mehr aufweisen, lösemittelfrei ohne merkliche Rückspaltung in einfachen statischen Mischern herstellen lassen. Vielmehr mußte angenommen werden, daß eine kontinuierliche lösemittelfreie Produktion derart hochviskoser Produkte entsprechend der Lehre der EP-A 669 354 ausschließlich in Intensiv-Knetern unter der Einwirkung hoher Scherkräfte möglich ist.

Gegenstand der vorliegenden Erfindung ist ein Verfahren zur Herstellung uretdiongruppenhaltiger Polyadditionsprodukte, die unterhalb von 40°C in fester und oberhalb von 125°C in flüssiger Form vorliegen, durch Umsetzung von
A) Uretdiongruppen aufweisenden Polyisocyanaten einer mittleren Isocyanatfunktionalität von mindestens 2,0, gegebenenfalls unter Mitverwendung von
B) weiteren Diisocyanaten in einer Menge von bis zu 70 Gew.-%, bezogen auf das Gesamtgewicht der Komponenten A) und B), mit
C) Polyolen des Molekulargewichtsbereiches von 62 - 2000 mit einer (mittleren) Funktionalität von mindestens 2,0 oder Gemischen von Polyolen und gegebenenfalls
D) weiteren gegenüber Isocyanatgruppen reaktiven, monofunktionellen Verbindungen in einer Menge von bis zu 40 Gew.-%, bezogen auf das Gesamtgewicht der Komponenten C) und D),
unter Einhaltung eines Äquivalentverhältnisses von Isocyanatgruppen zu gegenüber Isocyanaten reaktiven Gruppen von 1,8:1 bis 0,6:1, dadurch gekennzeichnet, daß man die Umsetzung in einem statischen Mischer durchführt.

Ausgangsverbindungen A) für das erfindungsgemäße Verfahren sind beliebige Uretdiongruppen aufweisende Polyisocyanate einer mittleren Isocyanatfunktionalität von mindestens 2,0, wie sie sich in an sich bekannter Weise durch katalytische Dimerisierung eines Teils der Isocyanatgruppen einfacher Diisocyanate und vorzugsweise sich anschließende Abtrennung des nicht umgesetzten Diisocyanatüberschusses, beispielsweise durch Dünnschichtdestillation, erhalten lassen. Zur Herstellung der Ausgangsverbindungen A) sind beliebige Diisocyanate mit aliphatisch, cycloaliphatisch, araliphatisch und/oder aromatisch gebundenen Isocyanatgruppen, beispielsweise solche des Molekulargewichtsbereiches 140 bis 400, geeignet, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3 und 1,4-Bis-(isocyanatomethyl)-cyclohexan, 1,3-Diisocyanato-2(4)-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 4,4'-Diisocyanatodicyclohexylmethan, Bis-(isocyanatomethyl)-norbornan, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate.

Als Katalysatoren zur Herstellung der Ausgangsverbindungen A) aus den genannten Diisocyanaten sind grundsätzlich alle bekannten, die Dimerisierung von Isocyanatgruppen katalysierenden Verbindungen geeignet, wie z.B. tertiäre organische Phosphine der in der US-PS 4 614 785, Kolonne 4, Zeilen 11 bis 47, oder DE-A 1 934 763 und 3 900 053 genannten Art, Tris-(dialkylamino)-phosphine der in der DE-A 3 030 513, DE-A 3 227 779 und DE-A 3 437 635 genannten Art, substituierte Pyridine der in der DE-A 1 081 895 und DE-A 3 739 549 genannten Art oder substituierte Imidazole oder Benzimidazole der in der EP-A 417 603 genannten Art.

Bevorzugte Ausgangsverbindungen A) für das erfindungsgemäße Verfahren sind Uretdiongruppen aufweisende Polyisocyanate auf Basis von Diisocyanaten mit aliphatisch und/oder cycloaliphatisch gebundenen Isocyanatgruppen der oben beispielhaft genannten Art oder Gemische solcher Polyisocyanate.

Besonders bevorzugt ist die Verwendung von Uretdiongruppen aufweisenden Polyisocyanaten auf Basis von HDI und/oder IPDI.

Bei der an sich bekannten Herstellung der Uretdiongruppen aufweisenden Polyisocyanate durch katalytische Dimerisierung der beispielhaft genannten Diisocyanate erfolgt oftmals in untergeordnetem Umfang gleichzeitig mit der Dimerisierungsreaktion eine Trimerisierungsreaktion unter Bildung von höher als difunktionellen, Isocyanuratgruppen aufweisenden Polyisocyanaten, was zur Folge hat, daß die mittlere NCO-Funktionalität der Komponente A), bezogen auf die freien NCO-Gruppen, vorzugsweise bei 2,0 bis 2,5 liegt.

Gegebenenfalls können beim erfindungsgemäßen Verfahren weitere Diisocyanate B) mitverwendet werden. Hierbei handelt es sich beispielsweise um die oben beschriebenen, zur Herstellung der Ausgangsverbindungen A) geeigneten Diisocyanate mit aliphatisch, cycloaliphatisch, araliphatisch und/oder aromatisch gebundenen Isocyanatgruppen. Diese Diisocyanate B) werden, falls überhaupt, in Mengen von bis zu 70 Gew.-%, vorzugsweise bis zu 50 Gew.-%, bezogen auf das Gesamtgewicht der Komponenten A) und B) mitverwendet. Für das erfindungsgemäße Verfahren geeignete Gemische an Ausgangskomponenten A) und B) stellen auch Lösungen von Uretdiongruppen aufweisenden Polyisocyanaten in monomeren Diisocyanaten dar, wie man sie bei der oben beschriebenen Herstellung der Ausgangsverbindungen A) erhält, wenn man nach anteiliger katalytischer Dimerisierung auf die Abtrennung der überschüssigen, nicht umgesetzten Diisocyanate verzichtet. In diesem Fall kann der Anteil der Diisocyanate B) an der Gesamtmenge der Ausgangskomponenten A) und B) auch bis zu 70 Gew.-% betragen. Bevorzugte Diisocyanate B), wie sie gegebenenfalls beim erfindungsgemäßen Verfahren mitverwendet werden können, stellen Diisocyanate mit cycloaliphatisch gebundenen Isocyanatgruppen dar. Besonders bevorzugt ist die Verwendung von IPDI und/oder 4,4'-Diisocyanatodicyclohexylmethan.

Ausgangsverbindungen C) für das erfindungsgemäße Verfahren sind beliebige Polyole des Molekulargewichtsbereiches von 62 - 2000, die eine (mittlere) OH-Funktionalität von mindestens 2,0 aufweisen oder Gemische solcher Polyole.

Geeignete Polyole C) sind beispielsweise einfache mehrwertige Alkohole des Molekulargewichtsbereiches 62 bis 400, wie z.B. 1,2-Ethandiol, 1,2- und 1,3-Propandiol, die isomeren Butandiole, Pentandiole, Hexandiole, Heptandiole und Octandiole, 1,2-und 1,4-Cyclohexandiol, 1,4-Cyclohexandimethanol oder 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat aber auch einfache Ester- oder Etheralkohole, wie z.B. Hydroxypivalinsäureneopentylglykolester, Diethylenglykol oder Dipropylenglykol.

Geeignete Ausgangsverbindungen C) sind auch die an sich bekannten Polyhydroxylverbindungen vom Polyester-, Polycarbonat-, Polyestercarbonat- oder Polyethertyp.

Als Polyolkomponenten C) geeignete Polyesterpolyole sind beispielsweise solche eines mittleren, aus Funktionalität und Hydroxylzahl berechenbaren Molekulargewichtes von 134 bis 2000, vorzugsweise von 250 bis 1500, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen, beispielsweise den obengenannten des Molekulargewichtsbereiches 62 bis 400, mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Die zur Herstellung der Polyesterpolyole verwendeten Säuren oder Säurederivate können aliphatischer, cycloaliphatischer und/oder aromatischer Natur sein und gegebenenfalls, z.B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Trimellithsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole können auch beliebige Gemische dieser beispielhaft genannten Ausgangsverbindungen eingesetzt werden.

Eine als Polyolkomponente C) bevorzugt eingesetzte Art von Polyesterpolyolen sind solche, wie sie sich in an sich bekannter Weise aus Lactonen und einfachen mehrwertigen Alkoholen, wie z.B. den oben beispielhaft genannten, als Startermolekülen unter Ringöffnung herstellen lassen. Geeignete Lactone zur Herstellung dieser Polyesterpolyole sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone.

Als Polyole C) geeignete Polyhydroxylverbindungen vom Polycarbonattyp stellen insbesondere die an sich bekannten Polycarbonatdiole dar, wie sie sich beispielsweise durch Umsetzung von zweiwertigen Alkoholen, beispielsweise solchen, wie sie oben in der Liste der mehrwertigen Alkohole des Molekulargewichtsbereichs 62 bis 400 beispielhaft genannt sind, mit Diarylcarbonaten, wie z.B. Diphenylcarbonat, oder Phosgen herstellen lassen.

Als Polyole C) geeignete Polyhydroxylverbindungen vom Polyestercarbonattyp sind insbesondere die an sich bekannten Estergruppen- und Carbonatgruppen aufweisende Diole, wie sie beispielsweise gemäß der Lehre der DE-A 1 770 245 durch Umsetzung zweiwertiger Alkohole mit Lactonen der oben beispielhaft genannten Art, insbesondere ε-Caprolacton und anschließende Reaktion der dabei entstehenden Polyesterdiole mit Diphenylcarbonat erhalten werden können.

Als Polyole C) geeignete Polyetherpolyole sind insbesondere solche eines mittleren, aus Funktionalität und Hydroxylzahl berechenbaren Molekulargewichtes von 200 bis 2000, vorzugsweise 250 bis 1500, mit einem Hydroxylgruppen-Gehalt von 1,7 bis 25 Gew.-%, vorzugsweise 2,2 bis 20 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, wie die oben beschriebenen des Molekulargewichtsbereichs 62 bis 400, als Startermoleküle eingesetzt werden. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polyetherpolyole sind auch die an sich bekannten Polyoxytetramethylenglykole, wie sie beispielsweise gemäß Angew. Chem. 72, 927 (1960) durch Polymerisation von Tetrahydrofuran erhalten werden können.

Als Ausgangsverbindungen C) ebenfalls geeignet sind Dimerdiole, wie sie in an sich bekannter Weise z.B. durch Hydrierung von dimeren Fettsäuren und/oder deren Estern gemäß der DE-A 1 768 313 oder anderen der in der EP-A 720 994 Seite 4, Zeile 33 bis Zeile 58 beschriebenen Verfahren hergestellt werden können.

Bevorzugte Ausgangsverbindungen C) für das erfindungsgemäßen Verfahren sind die obengenannten einfachen mehrwertigen Alkohole des Molekulargewichtsbereiches 62 bis 400, die genannten Polyester- oder Polycarbonatpolyole sowie beliebige Gemische dieser Polyolkomponenten.

Besonders bevorzugt kommen jedoch die oben innerhalb der Liste der einfachen mehrwertigen Alkohole genannten Diole des Molekulargewichtsbereiches 62 bis 300, Polyesterdiole oder Polycarbonatdiole des Molekulargewichtsbereiches 134 bis 1200 oder deren Gemische zum Einsatz.

Ganz besonders bevorzugte Ausgangsverbindungen C) für das erfindungsgemäße Verfahren sind Gemische der genannten Polyesterdiole mit bis zu 80 Gew.-%, vorzugsweise bis zu 60 Gew.-%, bezogen auf das Gesamtgewicht der eingesetzten Polyole C) an einfachen Diolen des Molekulargewichtsbereiches 62 bis 300.

Beim erfindungsgemäßen Verfahren können gegebenenfalls auch noch weitere gegenüber Isocyanatgruppen reaktive monofunktionelle Verbindungen D) mitverwendet werden. Hierbei handelt es sich insbesondere um einfache aliphatische bzw. cycloaliphatische Monoamine, wie Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine sowie Aminomethylcyclohexan, sekundäre Monoamine, wie Dimethylamin, Diethylamin, Dipropylamin, Diisopropylamin, Dibutylamin, Diisobutylamin, Bis(2-ethylhexyl)-amin, N-Methyl- und N-Ethylcyclohexylamin sowie Dicyclohexylamin oder Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole sowie Hydroxymethylcyclohexan.

Diese monofunktionellen Verbindungen D) kommen, falls überhaupt, in Mengen von bis zu 40 Gew.-%, vorzugsweise 25 Gew.-%, bezogen auf die Gesamtmenge an gegenüber Isocyanaten reaktiven Ausgangsverbindungen C) und D) zum Einsatz.

Bevorzugte Ausgangsverbindungen D) für das erfindungsgemäße Verfahren sind die einfachen aliphatischen oder cycloaliphatischen Monoalkohole der genannten Art.

Beim erfindungsgemäßen Verfahren werden die Uretdiongruppen aufweisenden Polyisocyanate A), gegebenenfalls unter Mitverwendung weiterer Diisocyanate B), mit den Polyolen C) und gegebenenfalls weiteren gegenüber Isocyanaten reaktiven, monofunktionellen Verbindungen D) in dem genannten Äquivalent-Verhältnis von Isocyanatgruppen zu gegenüber Isocyanaten reaktiven Gruppen von 1,8:1 bis 0,6:1, vorzugsweise 1,6:1 bis 0,8:1 umgesetzt.

Dazu werden die Ausgangsverbindungen in entsprechenden Mengen, gegebenenfalls vorgewärmt auf Temperaturen bis zu 120°C, vorzugsweise bis zu 90°C, mit Hilfe geeigneter handelsüblicher Pumpen, insbesondere pulsationsarmer Kolben-, Membran- oder Zahnradpumpen, kontinuierlich einem statischen Mischer zudosiert. Dies kann in getrennten Eduktströmen erfolgen, bei Einsatz von mehr als zwei Ausgangsverbindungen kann es aber auch von Vorteil sein, mehrere Edukte, beispielsweise die isocyanatfunktionellen Ausgangsverbindungen A) und gegebenenfalls B) und/oder die gegenüber Isocyanatgruppen reaktiven Ausgangsverbindungen C) und gegebenenfalls D), zu jeweils einem Eduktstrom zusammenzufassen.

Gegebenenfalls können den Ausgangsverbindungen dabei noch weitere Hilfs- und Zusatzmittel zugesetzt werden.

Zur Beschleunigung der Polyadditionsreaktion können beispielsweise die üblichen aus der Polyurethanchemie bekannten Katalysatoren, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat und Molybdänglykolat, mitverwendet werden.

Diese Katalysatoren werden gegebenenfalls in Mengen von 0,001 bis 2,0 Gew.-%, bevorzugt 0,01 bis 0,5 Gew.-%, bezogen auf die Gesamtmenge der verwendeten Ausgangsverbindungen eingesetzt.

Weitere Hilfs- und Zusatzmittel, die den Ausgangsverbindungen beim erfindungsgemäßen Verfahren gegebenenfalls zugesetzt werden können, sind beispielsweise die aus der Pulverlacktechnologie bekannten Verlaufsmittel, wie z.B. Polybutylacrylat oder solche auf Basis von Polysilikonen, Lichtschutzmittel, wie z.B. sterisch gehinderte Amine, UV-Absorber, wie z.B. Benztriazole oder Benzophenone sowie Farbstabilisatoren gegen die Gefahr der Überbrennvergilbung, wie z.B. gegebenenfalls inerte Substituenten aufweisende, Trialkyl-, Triaryl- und/oder Trisalkylphenylphosphite.

Erfindungsgemäß erfolgt die Umsetzung der Ausgangsverbindungen in einem statischen Mischer, d. h. in einem mit geeigneten Einbauten zum Homogenisieren von Flüssigkeiten ausgerüsteten, gegebenenfalls temperierbaren Strömungsrohr. Als Rohrleitungseinbauten können statische Mischelemente unterschiedlicher Bauform zum Einsatz kommen, die gegebenenfalls auch in beliebiger Reihenfolge hintereinander angeordnet sein können. Geeignete Typen statischer Mischelemente sind beispielsweise die bekannten verdrillten Blechelemente (Kenics-Mischer), Metallgewebepackungen, wie z.B. SMX-, SMXL- oder SMR-Mischer der Fa. Sulzer (Winterthur, Schweiz) oder beliebige andere Mischertypen, wie sie z.B. in Chem.-Ing.-Tech.**52** (1980) 285 - 291 beschrieben sind. Bevorzugt kommen die genannten SMX- und/oder SMXL-Mischer zum Einsatz.

Der beim erfindungsgemäßen Verfahren eingesetzte statische Mischer ist vorzugsweise aus unterschiedlichen, gegebenenfalls getrennt temperierbaren Zonen aufgebaut und besteht zumindest aus einer Mischzone, in der die einzelnen Eduktströme zusammengeführt und innerhalb kurzer Zeit innig vermischt werden, sowie einer sich anschließenden Reaktionszone, in der die eigentliche Polyadditionsreaktion stattfindet. Um die in den jeweiligen Zonen einzuhaltenden Verweilzeiten bei einem gewünschten Durchsatz einzustellen, sind Länge und Durchmesser der eingebauten Mischelemente den betreffenden Verfahrensschritten speziell angepaßt.

In der Mischzone sind die statischen Mischelemente und der Reaktordurchmesser so dimensioniert, daß die Verweilzeit der Ausgangskomponenten in der Regel 0,1 bis 30 Sekunden, vorzugsweise 0,5 bis 20 Sekunden, besonders bevorzugt 1 bis 10 Sekunden beträgt. Die Mischelemente sind hier so gestaltet, daß bereits diese kurze Zeit ausreicht, um eine einwandfreie homogene Mischung der Edukte zu gewährleisten, bevor die Urethanisierungsreaktion einsetzt. Die Mischzone kann gegebenenfalls temperiert werden, wobei die Heiztemperatur bis zu 140°C, vorzugsweise bis zu 125°C, besonders bevorzugt bis zu 110°C betragen kann.

Die sich anschließende Reaktionszone muß so temperiert werden, daß die Produktschmelze jederzeit fließfähig bleibt, d. h. eine Temperatur oberhalb von 125°C, vorzugsweise eine Temperatur von 125 bis 200°C und besonders bevorzugt von 130 bis 180°C aufweist. Unter Berücksichtigung der Exothermie der Urethanisierungsreaktion genügen hierzu im allgemeinen Heiztemperaturen von 60 bis 180°C, vorzugsweise 70 bis 160°C, besonders bevorzugt 80 bis 140°C. Die statischen Mischelemente und der Reaktordurchmesser sind in der Reaktionszone so gestaltet, daß die Verweildauer der Reaktionsschmelze im allgemeinen 0,5 bis 30 Minuten, vorzugsweise 1 bis 15 Minuten und besonders bevorzugt 2 bis 10 Minuten beträgt. Nach dieser Zeit ist die Umsetzung im allgemeinen abgeschlossen.

Nach Verlassen der Reaktionszone wird die Produktschmelze möglichst rasch, beispielsweise mit Hilfe eines Kühlbandes, abgekühlt und das uretdiongruppenhaltige Verfahrensprodukt nach üblichen aus der Pulverlacktechnologie bekannten Methoden, beispielsweise durch Schuppen oder Pastillieren, konfektioniert.

Aufgrund der kurzen Verweilzeit (geringe thermische Belastung) im statischen Mischer tritt beim erfindungsgemäßen Verfahren nur minimale Uretdionspaltung auf. In Abhängigkeit vom gewählten Äquivalentverhältnis von Isocyanatgruppen zu gegenüber Isocyanaten reaktiven Gruppen werden unter den genannten Bedingungen uretdiongruppenhaltige Polyadditionsverbindungen mit einer mittleren Isocyanatfunktionalität von 1,8 bis 8,0, vorzugsweise von 2,0 bis 6,0, besonders bevorzugt von 2,0 bis 5,0, mit Gehalten an freien Isocyanatgruppen von 0 bis 6,0 Gew.-%, vorzugsweise von 0 bis 5,0 Gew.-%, besonders bevorzugt von 0 bis 4,0 Gew.-%, und einem Gehalt an Uretdiongruppen von 3 bis 19 Gew.-%, vorzugsweise von 5 bis 17 Gew.-%, besonders bevorzugt von 7 bis 17 Gew.-%, erhalten, die unterhalb 40°C fest und oberhalb 125°C flüssig sind und insbesondere einen nach der DifferentialThermoanalyse (DTA) bestimmten Schmelzpunkt bzw. Schmelzbereich aufweisen, der innerhalb eines Temperaturbereiches von 40 bis 110°C, besonders bevorzugt innerhalb des Temperaturbereiches von 50 bis 100°C liegt.

Das erfindungsgemäße Verfahren ermöglicht auf sehr einfache Weise in preiswerten Anlagen, die nur geringe Energie-, Wartungs- und Instandhaltungskosten erfordern, eine lösemittelfreie Produktion uretdiongruppenhaltiger Polyadditionsverbindungen. Dabei lassen sich selbst solche Produkte mit konstanter Qualität herstellen, die aufgrund einer zu hohen Schmelzviskosität und der damit verbundenen mangelnden Rührbarkeit in diskontinuierlichen Verfahren nicht erhalten werden können.

Die nach dem erfindungsgemäßen Verfahren erhältlichen uretdiongruppenhaltigen Polyadditionsverbindungen stellen wertvolle Ausgangsmaterialien zur Herstellung von Polyurethankunststoffen nach dem Isocyanat-Polyadditionsverfahren dar. Sie finden insbesondere Verwendung als Vemetzerkomponente in hitzehärtbaren blockierungsmittelfreien PUR-Pulverlacken.

### Beispiele

Alle Prozentangaben beziehen sich auf das Gewicht.

### Beispiel 1

Es wird ein statischer Mischer mit Doppelmantelbeheizung bestehend aus einer Mischzone sowie einer Reaktionszone mit einem Gesamtvolumen von 180 ml verwendet. Als Mischelement dient in der Mischzone ein SMX 6-Mischer der Fa. Sulzer (Winterthur, Schweiz) mit einem Durchmesser von 6 mm und einer Länge von 60,5 mm, in der Reaktionszone ein SMXL 20-Mischer der Fa. Sulzer mit einem Durchmesser von 20 mm und einer Länge von 520 mm.

Die Dosierung der Edukte erfolgt mit Hilfe einer speziell für die Beschickung von statischen Mischern ausgerüsteten zweiköpfigen Kolbendosierpumpe EK2 der Fa. Lewa (Leonberg), bei der beide Pumpenköpfe gleichzeitig ausstoßen.

Aus einem Vorlagekolben A werden der Mischzone des statischen Mischers pro Stunde 1435 g (6,0 val) eines unter trockenem Stickstoff auf eine Temperatur von 80°C erwärmten uretdiongruppenhaltigen Polyisocyanates auf Basis von 1-Isocyanato-3,3,5-trimethyl-5-isocyanatomethylcyclohexan (IPDI) mit einem Gehalt an freien Isocyanatgruppen von 17,5 %, einer mittleren NCO-Funktionalität von 2,0 und einem Gehalt an Uretdiongruppen (bestimmt durch Heißtitration) von 20,2 % kontinuierlich zudosiert. Die Rohrleitungen zwischen Vorlage A und der Pumpe bzw. Pumpe und statischem Mischer sowie der betreffende Pumpenkopf werden auf eine Temperatur von 98 bis 102°C geheizt.

Gleichzeitig werden der Mischzone aus einer weiteren Vorlage B pro Stunde 720 g (6,0 val) einer Mischung aus 85,6 Gew.-Teilen eines Polyesterdiols auf Basis von 1,4-Butandiol und ε-Caprolacton mit einer OH-Zahl vom 427 mg KOH/g, 3,6 Gew.-Teilen 1,4-Butandiol, 10,6 Gew.-Teilen 2-Ethyl-1-hexanol und 0,2 Gew.-Teilen Dibutylzinn(IV)-dilaurat (DBTL) als Katalysator zugeführt. Eine Beheizung von Vorlage, Rohrleitungen und Pumpenkopf ist hier aufgrund der niedrigen Viskosität der Polyolmischung nicht erforderlich.

Der statische Mischer wird über die gesamte Länge auf eine Manteltemperatur von 108 bis 112°C beheizt. Die mittlere Verweilzeit der Reaktionsschmelze beträgt 5 min. Das Produkt, das den statischen Mischer am Ende der Reaktionszone mit einer Temperatur von ca. 140°C verläßt, wird zum Erkalten auf Bleche geleitet. Man erhält einen blaßgelben Feststoff mit folgenden Kenndaten:

| | |
|---|---|
| NCO-Gehalt | 0,4 % |
| Uretdiongruppen-Gehalt (ber.) | 13,6 % |
| Schmelzpunkt | 98 - 100°C |
| Glasübergangstemperatur | 58°C |
| Viskosität (130°C) | ca. 520 Pa·s |

### Beispiel 2 (Vergleich)

1 000 g (4,1 val) des uretdiongruppenhaltigen Polyisocyanates aus Beispiel 1 (Vorlage A) werden in einer Rührapparatur unter trockenem Stickstoff auf 80°C erwärmt. Anschließend gibt man unter Rühren innerhalb von 30 min 493 g (4,1 val) des in Beispiel 1 (Vorlage B) beschriebenen, katalysierten Polyolgemisches zu. Bereits während des Zutropfens muß aufgrund der rasch ansteigenden Viskosität der Mischung die Heizbadtemperatur auf 120°C erhöht werden, um die Rührfähigkeit weiterhin zu gewährleisten. Nach 45 min beträgt der NCO-Gehalt der nun hochviskosen Reaktionsmischung 1,8 %, die Heizbadtemperatur muß auf 130°C gesteigert werden. Nach 60 min hat sich der NCO-Gehalt auf 3,5 % erhöht.

Das Vergleichsbeispiel zeigt, daß das nach dem in Beispiel 1 beschriebenen erfindungsgemäßen Verfahren erhaltene uretdiongruppenhaltige Polyadditionsprodukt aufgrund seiner hohen Schmelzviskosität in diskontinuierlicher Kesselfahrweise nicht mit einem niedrigen Rest-NCO-Gehalt hergestellt werden kann. Bei längerer Verweilzeit im Reaktor tritt in erheblichem Maße Uretdionspaltung unter Freisetzung von Isocyanatgruppen ein.

### Beispiel 3

Nach dem in Beispiel 1 beschriebenen Verfahren und in der dort beschriebenen Apparatur wird eine uretdiongruppenhaltige Polyadditionsverbindung hergestellt. Dazu werden der Mischzone aus Vorlage A pro Stunde 1230 g (5,1 val) des in Beispiel 1 genannten auf 80°C vorgeheizten IPDI-Uretdions und gleichzeitig aus Vorlage B 570 g (5,1 val) eines Polyolgemisches, bestehend aus 60,0 Gew.-Teilen eines Polyesterdiols auf Basis von Adipinsäure und 1,4-Butandiol mit einer OH-Zahl von 120 mg KOH/g, 31,3 Gew.-Teilen 1,4-Butandiol, 8,5 Gew.-Teilen 2-Ethyl-1-hexanol und 0,2 Gew.-Teilen DBTL, zudosiert.

Der statische Mischer wird wie in Beispiel 1 beheizt, die mittlere Verweilzeit der Reaktionsschmelze beträgt ca. 6 min. Man erhält einen praktisch farblosen Feststoff mit folgenden Kenndaten:

| | |
|---|---|
| NCO-Gehalt | 0,6 % |
| Uretdiongruppen-Gehalt (ber.) | 13,8 % |
| Schmelzpunkt | 84 - 87°C |
| Glasübergangstemperatur | 61°C |
| Viskosität (130°C) | ca. 500 Pa·s |

### Beispiel 4

Nach dem in Beispiel 1 beschriebenen Verfahren und in der dort beschriebenen Apparatur wird eine uretdiongruppenhaltige Polyadditionsverbindung hergestellt. Dazu werden der Mischzone aus Vorlage A pro Stunde 1815 g (7,8 val) eines auf 80°C vorgeheizten Polyisocyanatgemisches, bestehend aus 79,7 Gew.-Teilen des in Beispiel 1 genannten uretdiongruppenhaltigen Polyisocyanates auf Basis von IPDI und 20,3 Gew.-Teilen eines Uretdion- und Isocyanuratgruppenhaltigen Polyisocyanates auf Basis von 1,6-Diisocyanatohexan (HDI) mit einem Gehalt an freien Isocyanatgruppen von 20,6 %, einer mittleren NCO-Funktionalität von 2,3 und einem Gehalt an Uretdiongruppen (bestimmt durch Heißtitration) von 15,0 %, und gleichzeitig aus Vorlage B 885 g (7,8 val) eines Polyolgemisches, bestehend aus 59,2 Gew.-Teilen eines Polyesterdiols auf Basis von Adipinsäure und Neopentylglykol mit einer OH-Zahl von 224 mg KOH/g, 23,0 Gew.-Teilen 1,4-Butandiol, 17,6 Gew.-Teilen 2-Ethyl-1-hexanol und 0,2 Gew.-Teilen DBTL, zudosiert.

Der statische Mischer wird wie in Beispiel 1 beheizt, die mittlere Verweilzeit der Reaktionsschmelze beträgt ca. 4 min. Man erhält einen praktisch farblosen Feststoff mit folgenden Kenndaten:

| | |
|---|---|
| NCO-Gehalt | 0,4 % |
| Uretdiongruppen-Gehalt (ber.) | 13,6 % |
| Schmelzpunkt | 93 - 96°C |
| Glasübergangstemperatur | 50°C |
| Viskosität (130°C) | ca. 460 Pa·s |

## Patentansprüche

1. Verfahren zur Herstellung uretdiongruppenhaltiger Polyadditionsprodukte, die unterhalb von 40°C in fester und oberhalb von 125°C in flüssiger Form vorliegen, durch Umsetzung von
A) Uretdiongruppen aufweisenden Polyisocyanaten einer mittleren Isocyanatfunktionalität von mindestens 2,0, gegebenenfalls unter Mitverwendung von
B) weiteren Düsocyanaten in einer Menge von bis zu 70 Gew.-%, bezogen auf das Gesamtgewicht der Komponenten A) und B), mit
C) Polyolen des Molekulargewichtsbereiches von 62 - 2000 mit einer (mittleren) Funktionalität von mindestens 2,0 oder Gemischen von Polyolen und gegebenenfalls
D) weiteren gegenüber Isocyanatgruppen reaktiven, monofunktionellen Verbindungen in einer Menge von bis zu 40 Gew.-%, bezogen auf das Gesamtgewicht der Komponenten C) und D),
unter Einhaltung eines Äquivalentverhältnisses von Isocyanatgruppen zu gegenüber Isocyanaten reaktiven Gruppen von 1,8:1 bis 0,6:1, **dadurch gekennzeichnet, daß** man die Umsetzung in einem statischen Mischer durchführt.

2. Verfahren gemäß Anspruch 1, **dadurch gekennzeichnet, daß** man als Uretdiongruppen aufweisende Polyisocyanate A) solche auf Basis von Diisocyanaten mit aliphatisch und/oder cycloaliphatisch gebundenen Isocyanatgruppen oder Gemische solcher Polyisocyanate verwendet.

3. Verfahren gemäß Anspruch 1, **dadurch gekennzeichnet, daß** man als Uretdiongruppen aufweisende Polyisocyanate A) solche auf Basis von 1,6-Diisocyanatohexan und/oder 1-Isocyanato-3,3,5-trimethyl-5-isocyanatomethylcyclohexan oder Gemische solcher Polyisocyanate verwendet.

4. Verfahren gemäß Anspruch 1, **dadurch gekennzeichnet, daß** man als Polyole C) einfache mehrwertige Alkohole des Molekulargewichtsbereiches 62 bis 400, Polyester- oder Polycarbonatpolyole oder beliebige Gemische solcher Polyole verwendet.

5. Verfahren gemäß Anspruch 1, **dadurch gekennzeichnet, daß** man als Polyole C) einfache Diole des Molekulargewichtsbereiches 62 bis 300, Polyester- oder Polycarbonatdiole des Molekulargewichtsbereiches 134 bis 1200 oder beliebige Gemische solcher Diole verwendet.

6. Verfahren gemäß Anspruch 1, **dadurch gekennzeichnet, daß** man als Polyole C) Gemische von Polyesterdiolen des Molekulargewichtsbereiches 134 bis 1200 mit bis zu 80 Gew.-%, bezogen auf das Gesamtgewicht der eingesetzten Polyole C), an einfachen Diolen des Molekulargewichtsbereiches 62 bis 300 verwendet.

7. Verfahren gemäß Anspruch 1, **dadurch gekennzeichnet, daß** der statische Mischer aus unterschiedlichen, gegebenenfalls getrennt temperierbaren Zonen aufgebaut ist und mindestens aus einer Mischzone und einer sich anschließenden Reaktionszone besteht.

8. Verfahren gemäß Anspruch 7, **dadurch gekennzeichnet, daß** der statische Mischer eine auf eine Temperatur bis zu 140°C geheizte Mischzone und eine sich anschließende, auf eine Temperatur von 60 bis 180°C geheizte Reaktionszone aufweist.

## Claims

1. A process for producing uretidione group-containing polyaddition products, which are present in solid form below 40°C and in liquid form above 125°C, by reacting
A) uretidione group-comprising polyisocyanates with an average isocyanate functionality of at least 2.0, optionally together with
B) further diisocyanates in an amount of up to 70 wt.%, relative to the total weight of components A) and B), with
C) polyols with molecular weights in the range of from 62 - 2000 with an (average) functionality of at least 2.0 or mixtures of polyols and optionally
D) further monofunctional compounds, reactive in relation to isocyanate groups, in an amount of up to 40 wt.%, relative to the total weight of components C) and D),
while maintaining an equivalent ratio of isocyanate groups to groups reactive-in relation to isocyanates of 1.8:1 to 0.6:1, **characterised in that** the reaction is performed in a static mixer.

2. A process according to claim 1, **characterised in that** the uretidione group-comprising polyisocyanates A) are those based on diisocyanates which have aliphatically and/or cycloaliphatically attached isocyanate groups or mixtures of such polyisocyanates.

3. A process according to claim 1, **characterised in that** the uretidione group-comprising polyisocyanates A) are those based on 1,6-diisocyanatohexane and/or 1-isocyanato-3,3,5-trimethyl-5-isocyanatomethylcyclohexane or mixtures of such polyisocyanates.

4. A process according to claim 1, **characterised in that** simple polyhydric alcohols with molecular weights in the range of from 62 to 400, polyesters or polycarbonate polyols or any mixtures of such polyols are used as the polyols C).

5. A process according to claim 1, **characterised in that** simple diols with molecular weights in the range of from 62 to 300, polyester or polycarbonate diols with molecular weights in the range of from 134 to 1200 or any mixtures of such diols are used as the polyols C).

6. A process according to claim 1, **characterised in that** mixtures of polyester diols with molecular weights in the range from 134 to 1200 and having up to 80 wt.%, relative to the total weight of the polyols C) used, of simple diols with molecular weights in the range of from 62 to 300 are used as the polyols C).

7. A process according to claim 1, **characterised in that** the static mixer is composed of various zones, the temperature of which may optionally be separately controlled, and.consists of at least one mixing zone and a subsequent reaction zone.

8. A process according to claim 7, **characterised in that** the static mixer comprises a mixing zone heated to a temperature of up 140°C and a subsequent reaction zone heated to a temperature of from 60 to 180°C.

## Revendications

1. Procédé de préparation de produits de polyaddition contenant des groupes uretdione, qui se présentent sous forme solide au-dessous de 40°C et sous forme liquide au-delà de 125°C, par réaction de
A) polyisocyanates contenant des groupes uretdione d'une fonctionnalité isocyanate moyenne d'au moins 2,0, éventuellement avec utilisation conjointe
B) d'autres isocyanates, en une quantité jusqu'à 70% en poids, par rapport au poids total des composants
A) et B), avec
C) des polyols de la plage de poids moléculaire de 62 à 2000 ayant une fonctionnalité (moyenne) d'au moins 2,0, ou des mélanges de polyols, et éventuellement
D) d'autres composés monofonctionnels réactifs vis-à-vis des isocyanates, en une quantité jusqu'à 40% en poids, par rapport au poids total des composants C) et D) ,
avec maintien d'un rapport d'équivalence des groupes isocyanate aux groupes réactifs vis-à-vis des isocyanates de 1,8:1 à 0,6:1, **caractérisé en ce que** l'on entreprend la réaction dans un mélangeur statique.

2. Procédé selon la revendication 1, **caractérisé en ce que** l'on utilise comme polyisocyanates A) contenant des groupes uretdione ceux à base de diisocyanates comportant des groupes isocyanate liés aliphatiques et/ou cycloaliphatiques, ou des mélanges de tels polyisocyanates.

3. Procédé selon la revendication 1, **caractérisé en ce que** l'on utilise comme polyisocyanates A) contenant des groupes uretdione ceux à base de 1,6-diisocyanatohexane et/ou de 1-isocyanato-3,3,5-triméthyl-5-isocyanatométhylcyclohexane, ou des mélanges de tels polyisocyanates.

4. Procédé selon la revendication 1, **caractérisé en ce que** l'on utilise comme polyols C) des alcools simples polyvalents de la plage de poids moléculaire de 62 à 400, des polyesters polyols ou des polycarbonates polyols ou des mélanges quelconques de tels polyols.

5. Procédé selon la revendication 1, **caractérisé en ce que** l'on utilise comme polyols C) des diols simples de la plage de poids moléculaire de 62 à 300, des polyesters diols ou des polycarbonates diols de la plage de poids moléculaire de 134 à 1200 ou des mélanges quelconques de tels diols.

6. Procédé selon la revendication 1, **caractérisé en ce que** l'on utilise comme polyols C) des mélanges de polyesterdiols de la plage de poids moléculaire de 134 à 1200 avec jusqu'à 80% en poids, par rapport au poids total des polyols C) mis en oeuvre, de diols simples de la plage de poids moléculaire de 62 à 300.

7. Procédé selon la revendication 1, **caractérisé en ce que** le mélangeur statique est constitué de différentes zones, éventuellement à régulation de température séparée, et consiste en au moins une zone de mélange et une zone de réaction subséquente.

8. Procédé selon la revendication 7, **caractérisé en ce que** le mélangeur statique présente une zone de mélange chauffée à une température jusqu'à 140°C et une zone de réaction subséquente, chauffée à une température de 60 à 180°C.
